# EUROPÄISCHE PATENTSCHRIFT

(11) **EP 0 578 223 B1**
(45) Veröffentlichungstag und Bekanntmachung des Hinweises auf die Patenterteilung: **28.06.1995**
(21) Anmeldenummer: 93110857.5
(22) Anmeldetag: 07.07.1993
(51) Int. Cl.: B60K 41/22

(54) **Eichverfahren für Getriebesteuerelemente**
Calibration method for transmission control elements
Méthode d'étalonnage pour des éléments de commande d'une transmission

(30) Priorität: 09.07.1992 US 910818
(43) Veröffentlichungstag der Anmeldung: 12.01.1994
(73) Patentinhaber: DEERE & COMPANY, Moline, Illinois 61265 (US)
(72) Erfinder: Falck, Peter Leslie, Waterloo, Iowa 50702 (US); Jeffries, Dennis Lee, Waterloo, Iowa 50701 (US); Brandon, David Eugene, Waterloo, Iowa 50701 (US)
(74) Vertreter: Feldmann, Bernhard

(56) Entgegenhaltungen:
- US-A- 4 969 098
- US-A- 4 989 471

## Beschreibung

Die Erfindung betrifft ein Verfahren zur Eichung von hydraulischen Parametern wenigstens eines Steuerelements, das Bestandteil der Steueranordnung eines Fahrzeuglastschaltgetriebes ist. Das Lastschaltgetriebe wird durch einen Motor angetrieben, Seine Ausgangswelle ist durch eine Trennvorrichtung wahlweise mit der Fahrzeugantriebswelle verbindbar oder von dieser trennbar. Zur Umschaltung des Lastschaltgetriebes zwischen unterschiedlichen Übertragungsverhältnissen weist dieses mehrere durch Hydraulikdruck steuerbare Steuerelemente, z. B. Kupplungen oder Bremsen auf, von denen wenigstens das zu eichende Steuerelement durch ein elektrohydraulisches Proportionalsteuerventil ansteuerbar ist. Die Steueranordnung enthält zweckmäßigerweise einen Mikroprozessor. Das Eichverfahren dient zur Bestimmung bestimmter Schlüsselparameter, die sich auf die Betätigung und Steuerung der Steuerelemente beziehen. Ausgangspunkt des Eichverfahrens sind die im Oberbegriff des Patentanspruchs 1 angegebenen Verfahrensschritte, die bereits durch die US-A-4,989,471 vorgeschlagen wurden.

Es wurden bereits einige elektrohydraulische Getriebesteuerungen mit einigem Erfolg angewendet. Bei einigen dieser Steuerungen wurden Proportionalsteuerventile verwendet. Die meisten dieser Steuerungen verwenden jedoch hauptsächlich einfache Ein-Aus-Ventile mit allenfalls einer oder zwei Getriebesteuerkupplungen, die durch Proportionalsteuerventile gesteuert werden. Beispielsweise enthält ein durch die Fa. Ford New Holland, Ltd. vertriebenes Lastschaltgetriebe zwei Regelventile, die drei verschiedene Getriebesteuerkupplungen steuern. Diese Ventile werden ihrerseits durch ein elektronisches Regelgerät gesteuert. Eine derartige proportionale Steuerung ermöglicht es, daß ein Kupplungselement während des Eingriffs- und Lösevorganges des Elements moduliert wird. Das Regelgerät ermöglicht es ferner, für jeden einzelnen Gang die Modulation für ein bestimmtes Element zu variieren. In der US-A-4,855,913 ist eine andere Anordnung beschrieben, welche Ein-Aus-Ventile und wenigstens ein Proportionalsteuerventil enthält.

Bei derartigen Anordnungen mit Proportionalsteuerventilen ist es möglich und wünschenswert, die Drehmomentkapazität der Kupplungen während des Eingriffs genau zu steuern. Während das elektrische Steuersignal, das an das Steuerventil angelegt wird, sehr genau vorgegeben werden kann, verursachen Herstellungstoleranzen der Ventile und des Getriebes große Abweichungen zwischen verschiedenen Fahrzeugen. Ist es bekannt, welches elektrische Steuersignal dem anfänglichen Kupplungseingriffsdruck, der erforderlich ist, damit die Kupplung gerade beginnt, Drehmomente zu übertragen, entspricht, so kann dieses Steuersignal verwendet werden, um das Schaltsignal für diese Kupplung während der Umschaltungen so zu modifizieren, daß sich eine optimale Steuerung ergibt.

Es ist ferner nützlich, die Füllzeit der Kupplung zu bestimmen, die dem Ölvolumen entspricht, das erforderlich ist, um eine Getriebesteuerkupplung zu füllen und in Eingriff zu bringen. Dies wäre zweckmäßig, da die Herstellungstoleranzen Abweichungen zwischen Getrieben zur Folge haben können. Auch kann sich die Kupplungsfüllzeit infolge eines normalen Bauteileverschleisses ändern. Können diese Änderungen gemessen werden, so läßt sich das Umschaltsignal anpassen, um den Änderungen Rechnung zu tragen.

Beispielsweise offenbart die US-A-4,855,913, daß die Schlüsselparameter in der Steueranordnung den anfänglichen Kupplungseingriffsdruck (bezeichnet mit DC-MAX) und die Schnellfüllkupplungslaufzeit (bezeichnet mit T1) enthalten. Es wird ferner bemerkt, daß DC-MAX und T1 durch Labor- oder Feldtests festgestellt werden müssen. Es wird kein Verfahren angegeben, wie diese Werte ermittelt werden können.

Die US-A-4,989,471 beschreibt ein Eichverfahren oder eine Methode zur Ermittlung des Drucks, der erforderlich ist, um einen Kupplungseingriff bei einer Getriebesteueranordnung auf Mikroprozessorbasis zu erzielen. Das Verfahren beinhaltet das Abbremsen der Getriebeausgangswelle, dann stufenweise Erhöhung des Kupplungsdrucks und Sichern eines Wertes, der dem Kupplungsdruck entspricht, bei dem die Motordrehzahl abzunehmen beginnt. Dieses Verfahren erfordert jedoch eine Betätigung der Fahrzeugbremsen, um eine Drehung der Getriebeausgangswelle zu verhindern. Diese Prozedur kann gefahrvoll sein, wenn die Fahrzeugbremsen nicht betätigt sind oder wenn sie versagen, da dann eine unerwünschte Fahrzeugbewegung während des Eichvorgangs einsetzen kann. Die US-A-4,989,471 beschreibt auch ein alternatives Eichverfahren für eine Kupplung, bei dem erfaßt wird, wann die Kupplung genügend Drehmoment überträgt, um das Fahrzeug zu bewegen. Dieses alternative Verfahren erfordert, daß das Fahrzeug an einen Ort gebracht wird, an dem keine Sicherheitsbedenken bestehen. Das von einem derartigen Verfahren abgeleitete Ergebnis kann von den Eigenschaften des Untergrunds, auf dem das Fahrzeug steht, abhängen. Es wird kein Verfahren angegeben, um eine Kupplungsfüllzeit zu bestimmen.

Die US-A-5,082,097 bezieht sich auf ein Getrieberegelgerät für ein Getriebe, welches eine magnetspulenbetätigte Kupplung und ein Magnetventil zur Betätigung der Kupplung enthält. Es wird ein Eichverfahren oder eine Anordnung zur Ermittlung eines Stromsignals, welches dem Punkt entspricht, bei dem die Kupplung beginnt, ein Drehmoment zu übertragen, offenbart. Diese Anordnung enthält eine Fahrzeugüberwachungseinrichtung, welche ein Ansprechsignal erzeugt, wenn die Kupplung beginnt, einen vorherbestimmten Drehmomentenbetrag zu übertragen, sowie einen Speicher zur Speicherung eines Eichwertes, der dem Wert des Stromes entspricht, bei welchem die Kupplung den vorherbestimmten Drehmomentenbetrag zu übertragen beginnt. Diese Anordnung erfordert jedoch ein Regelgerät, welches ein gesteuertes Stromsignal erzeugt, sowie einen Stromüberwachungskreis, welcher ein Signal erzeugt, das dem Stromfluß zu dem Magnetventil entspricht. Ferner ist das Schwellwertsignal dieser Anordnung entweder die Fahrzeuggeschwindigkeit oder ein Abfall der Motordrehzahl, und das Eichverfahren scheint keine Trennung der Getriebeausgangswelle von der Antriebswelle des Fahrzeugs einzuschließen. Im Ergebnis scheint das in der US-A-5,082,097 beschriebene Eichverfahren dem Verfahren ähnlich zu sein, welches in der US-A-4,989,471 beschrieben wurde. Es scheint, daß eine Fahrzeugbewegung bzw. das Anlegen der Fahrzeugbremsen während der Durchführung des Eichverfahrens zugelassen werden muß.

Die der Erfindung zugrunde liegende Aufgabe wird darin gesehen, ein Verfahren der eingangs genannten Art anzugeben, durch das sich Schlüsselparameter zur Steuerung der Proportionalventile eines Lastschaltgetriebes bestimmen lassen. Das Verfahren soll sich unmittelbar nach der Herstellung des Lastschaltgetriebes oder seines Einbaus in ein Fahrzeug bzw. nachdem das Lastschaltgetriebe bereits gealtert oder repariert wurde, anwenden lassen. Bei der Durchführung des Verfahrens soll weder eine Betätigung der Fahrzeugbremsen noch eine Bewegung des Fahrzeugs erforderlich sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Zur Eichung der Steueranordnung eines Fahrzeuglastschaltgetriebes wird zunächst die Getriebeausgangswelle von den Antriebsrädern getrennt, so daß sich die Getriebeausgangswelle frei drehen kann. Der Motor wird bei einer vorbestimmten Drehzahl betrieben. Abhängig davon, welches Getriebesteuerelement geeicht werden soll, werden von der Vielzahl der Steuerkupplungen bestimmte Steuerkupplungen, jedoch nicht das zu eichende Element, voll unter Druck gesetzt, so daß sie einrücken, um die Drehung eines Teils des zu eichenden Elements (beispielsweise Kupplung oder Bremse) zu verhindern. Dann wird die Einschaltdauer eines pulsweitenmodulierten Spannungssignals, das an das Proportionalsteuerventil angelegt ist, schrittweise verändert, um den an das zu eichende Element angelegten Druck zu erhöhen, währenddessen die Motordrehzahl überwacht wird. Wenn die Motordrehzahl um einen vorherbestimmten Wert abfällt, wird ein Wert, der dem an das Proportionalsteuerventil angelegten Druck entspricht, als Kupplungseichdruckwert gespeichert. Um das Füllvolumen eines Elements zu bestimmen, wird das Element voll unter Druck gesetzt, während die Motordrehzahl überwacht wird. Die Zeit, die bei diesem Unterdrucksetzen erforderlich ist, um einen Abfall der Motordrehzahl zu verursachen, repräsentiert das Flüssigkeitsvolumen, das erforderlich ist, um das Element so weit zu füllen, bis es beginnt, ein Drehmoment zu übertragen. Das Lastschaltgetriebe wird automatisch in seine Neutralstellung gebracht, wenn eine Fahrzeugbewegung festgestellt wird.

Anhand der Zeichnung werden nachfolgend die Erfindung sowie weitere Vorteile und vorteilhafte Weiterbildungen und Ausgestaltungen der Erfindung näher beschrieben und erläutert.

Es zeigt:
- Fig. 1: das schematische Blockdiagramm einer mikroprozessorunterstützten Getriebesteuerung, mit der das erfindungsgemäße Verfahren durchführbar ist,
- Fig. 2a: die schematische Darstellung eines Getriebes, bei dem die vorliegende Erfindung anwendbar ist,
- Fig. 2b: einen vergrößerten Ausschnitt der Fig. 2a,
- Fig. 3: das vereinfachte Logikflußdiagramm eines Bewegungserkenn- und -unterbrechungsalgorithmus, der dem erfindungsgemäßen Verfahren zugrunde liegt,
- Fig. 4a und 4b: das vereinfachte Logikflußdiagramme eines Hauptschleifenalgorithmus, der dem erfindungsgemäßen Verfahren zugrundeliegt,
- Fig. 4c: das vereinfachte Logikflußdiagramm eines Algorithmus zur Prüfung des Kupplungseingriffs, welcher durch das erfindungsgemäße Verfahren ausgeführt wird,
- Fig. 5: das vereinfachte Logikflußdiagramm eines Stabilisierungsalgorithmus, der durch den Hauptschleifenalgorithmus der vorliegenden Erfindung ausgeführt wird,
- Fig. 6a und 6a: das vereinfachte Logikflußdiagramm eines Druckeichalgorithmus, der durch den Hauptschleifenalgorithmus der vorliegenden Erfindung ausgeführt wird, und
- Fig. 7a und 7b: das vereinfachte Logikflußdiagramm eines Volumeneichalgorithmus, der durch den Hauptschleifenalgorithmus der vorliegenden Erfindung ausgeführt wird.

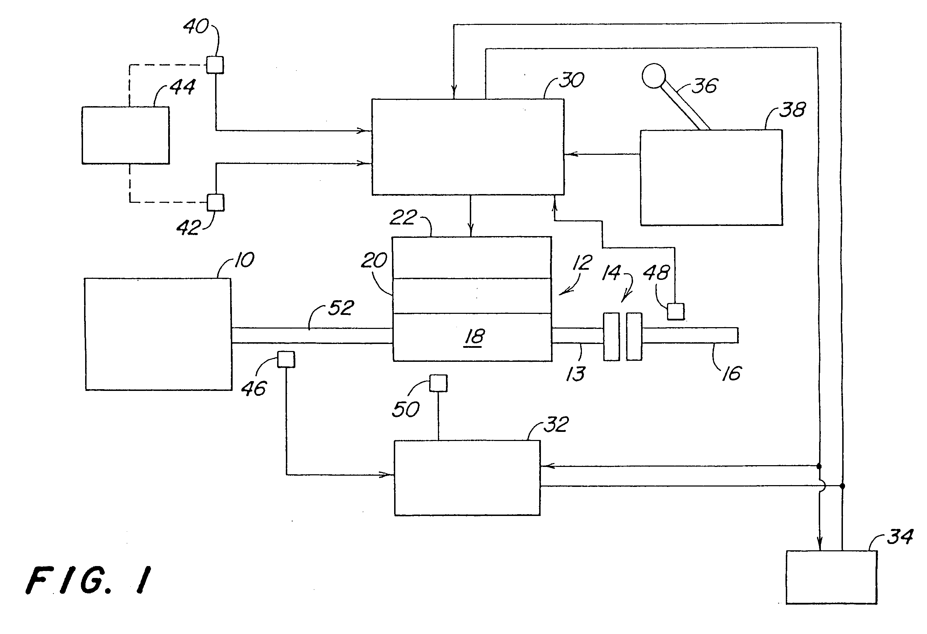

Gemäß Fig. 1 enthält ein Fahrzeugantriebsstrang einen Antriebsmotor 10, der ein Lastschaltgetriebe 12 antreibt, welches mit einer Ausgangswelle 13 über einen üblichen Entkupplungsmechanismus 14 eine Ausgangsantriebswelle 16 antreibt, die ihrerseits mit den nicht dargestellten Antriebsrädern des Fahrzeuges in Verbindung steht. Das Lastschaltgetriebe 12 enthält ein Getriebe 18, welches durch einen Satz druckbetätigbarer Steuerelemente oder Kupplungen 20 geschaltet wird. Die Steuerelemente oder Kupplungen 20 werden ihrerseits durch einen entsprechenden Satz elektromagnetisch betätigbarer Proportionalsteuerventile 22 betätigt. Bei dem Getriebe 18 kann es sich um ein Getriebe handeln, wie es beispielsweise in der US-A-5,011,465 beschrieben wurde. Die Proportionalsteuerventile 22 können zweistufige elektromagnetische Ventile sein, wie sie in der US-A-4,741,364 beschrieben wurden.

Das Lastschaltgetriebesteuersystem enthält eine Getriebesteuereinheit 30, einen Fahrzeugrechner 32 und eine Armaturenbrettanzeige 34. Bei der Getriebesteuereinheit 30 und dem Fahrzeugrechner 32 handelt es sich vorzugsweise um elektronische Steuereinheiten auf Mikroprozessorbasis. Eine manuelle Steuerung ist durch einen Schalthebel 36 möglich. Eine Gangwechselschalter- und Kodiereinheit 38 liefert Signale, die der Position des Schalthebels 36 entsprechen, an die Getriebesteuereinheit 30. Ein Kupplungseingriffsschalter 40 und ein Kupplungsausgriffsschalter 42 liefern Signale, die die Position eines Kupplungspedals 44 repräsentieren. Die Getriebesteuereinheit 30 empfängt ferner Signale von einem Fahrzeuggeschwindigkeitssensor 48. Der Fahrzeugrechner 32 empfängt auch Signale von einem Motordrehzahlsensor 46 und einem Getriebeöltemperatursensor 50. Der Fahrzeugrechner 32 sendet Informationen von diesen Sensoren 46, 50 an die Getriebesteuereinheit 30.

Die Getriebesteuereinheit 30 umfaßt einen nicht näher dargestellten handelsüblichen Mikroprozessor, der in Abhängigkeit von durch eine Bedienungsperson erzeugten Signalen ein Computerprogramm ausführt, durch das das nachfolgend beschriebene Eichverfahren wirksam wird. Die Getriebesteuereinheit 30 enthält ferner nicht näher gezeigte Ventiltreiber, die pulsweitenmodulierte Spannungssignale mit veränderbarer Einschaltdauer an die Proportionalsteuerventile 22 liefern. Die Getriebesteuereinheit 30 und die Ventiltreiber erzeugen derartige Signale in Abhängigkeit verschiedener erfaßter und durch die Bedienungsperson eingestellter Eingangsgrößen, um einen gewünschten Druck in den Kupplungen einzustellen und damit das Schalten des Lastschaltgetriebes 12 in gewünschter Weise zu beeinflussen. Die vorliegende Erfindung befaßt sich jedoch nicht mit der Steuerung der Getriebeschaltvorgänge, dem Lastschaltgetriebe 12 oder den Proportionalsteuerventilen 22 als solche, sondern mit der Eichung bestimmter Parameter. Das erfindungsgemäße Verfahren wird durch die Getriebesteuereinheit 30 realisiert, die ein entsprechendes Computerprogramm ausführt.

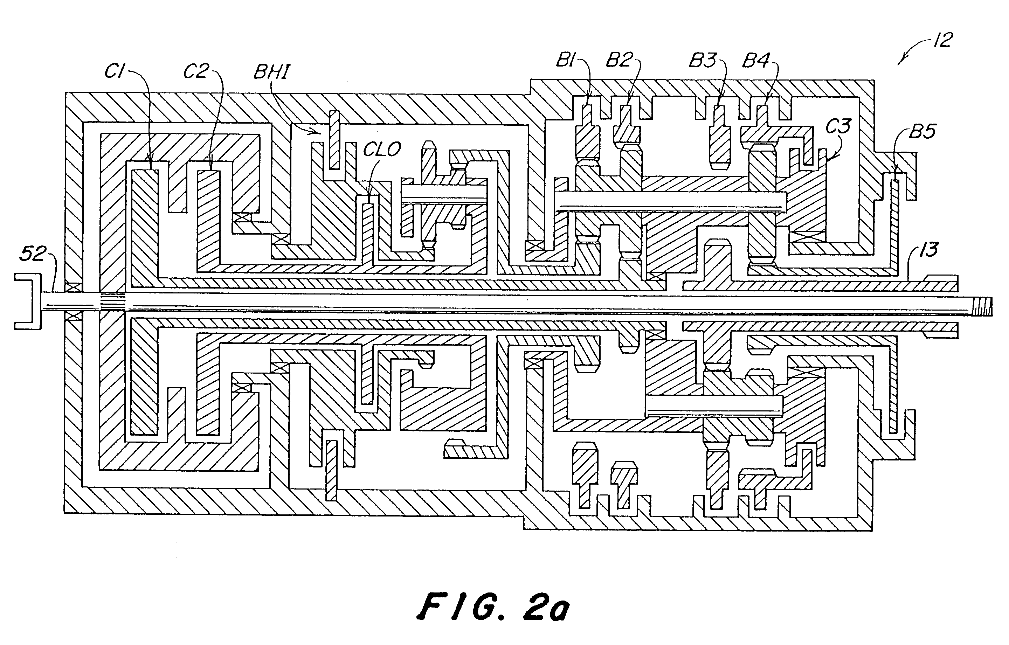

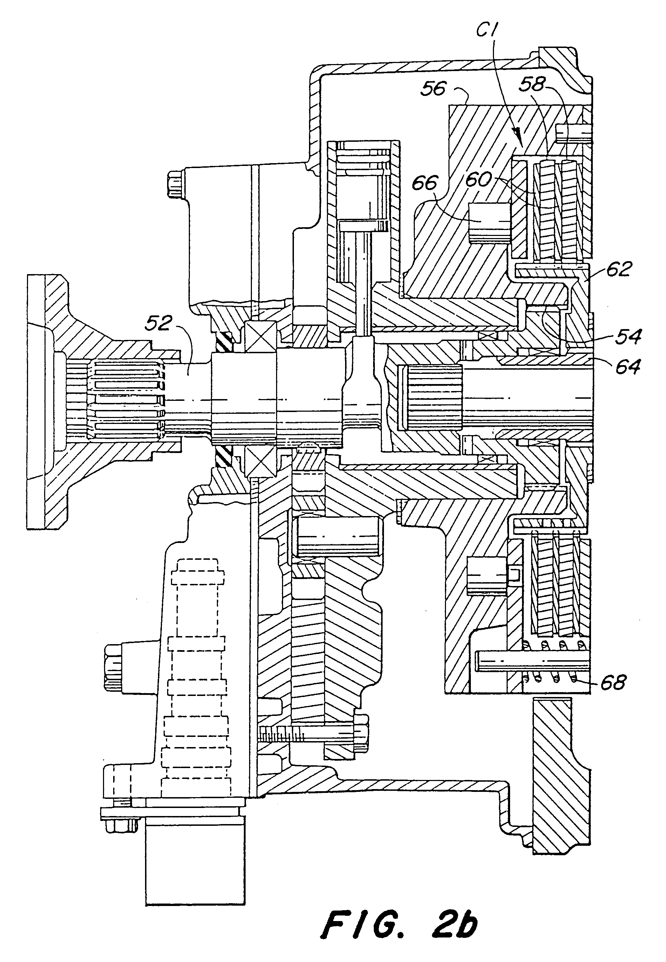

Gemäß der Fig. 2a und 2b enthalten die Steuerelemente des Lastschaltgetriebes 12 einen Satz von Bremselementen B1, B2, B3, B4 und B5 und einen Satz von Kupplungselementen C1, C2, C3 und CLO. Die Eingangswelle 52 ist über eine Keilverzahnung 54 mit der Kupplungstrommel 56 der Kupplung C1 und der Kupplung C2 (welche in Fig. 2b nicht dargestellt ist) drehfest verbunden. Die Kupplungstrommel 56 ihrerseits ist mit den Kupplungstrennscheiben 58 der Kupplung C1 verzahnt. Die Kupplungsscheiben 60 der Kupplung C1 sind mit der Kupplungsnabe 62 der Kupplung C1 verzahnt. Die Kupplungsnabe 62 ist mit der ersten Zwischenwelle 64 verzahnt. Die erste Kupplung C1 enthält einen Kupplungskolben 66, durch den die Kupplung C1 betätigt wird, indem die Kupplungstrennscheiben 58 und die Kupplungsscheiben 60 aufeinander gedrückt werden. Eine Feder 68 ist vorgesehen, um die Kupplung C1 in ihre nicht eingerückte Stellung vorzuspannen. Weitere Einzelheiten derartiger Getriebe können der US-A-5,011,465 entnommen werden.

Sowohl der Kupplungskolben 66 als auch die druckbetätigbaren Elemente der anderen Kupplungen C2, C3, CLO und Bremsen B1, B2, B3, B4, B5 werden jede von einer nicht dargestellten Pumpe unter der Kontrolle eines zugehörigen Steuerventils 22 in der üblichen, bekannten Weise mit Hydraulikflüssigkeit versorgt.

### Eichverfahren

Das im folgenden beschriebene Eichverfahren legt das Ventildrucksteuersignal Pfill(el) fest, welches erforderlich ist, um jede der Kupplungen oder Bremsen gerade in Eingriffsstellung zu bringen. Es ermittelt ferner die Füllvolumenzeit twake(el), die erforderlich ist, um die entsprechende Kupplung oder Bremse nahezu zu füllen.

Bevor das automatische Eichverfahren der Steuereinheit 30 ermöglicht wird, muß die Bedienungsperson den Entkupplungsmechanismus 14 ausrücken, so daß die Ausgangswelle 13 des Getriebes 18 frei drehbar ist. Der Schalthebel 36 muß sich in Neutralstellung befinden, die Öltemperatur muß über einem Schwellwert liegen und die Motordrehzahl muß (innerhalb eines Bereiches) auf ein bestimmentes Niveau gesetzt werden.

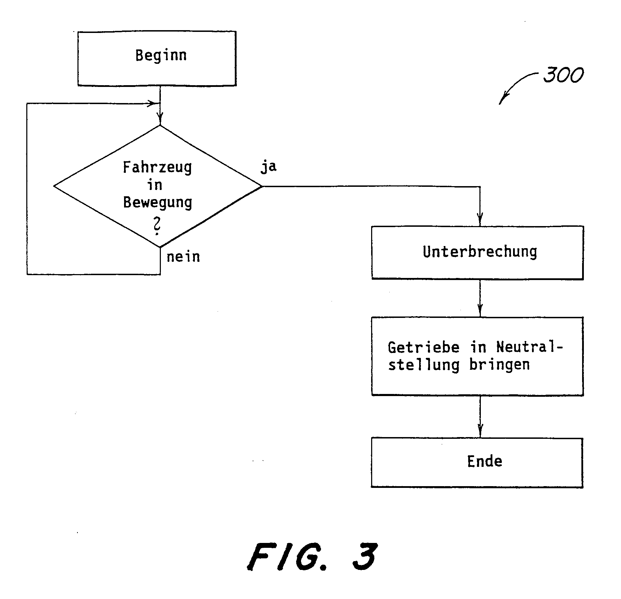

Entsprechend des in Fig. 3 dargestellten Flußdiagramms führt die Steuereinheit 30 ständig einen Bewegungserfassungs und Unterbrechungs-Algorithmus 300 aus, welcher im Hintergrund läuft, während andere Funktionen ausgeführt werden. Dieser Algorithmus 300 überwacht das Signal des Fahrzeuggeschwindigkeitssensors 48, um Bewegungen des Fahrzeuges festzustellen. Wird eine Fahrzeugbewegung festgestellt, so werden alle anderen Funktionen unterbrochen, und das Getriebe 18 wird automatisch in seine Neutralstellung geschaltet, um weitere Fahrzeugbewegungen zu verhindern.

### Haupteichschleife

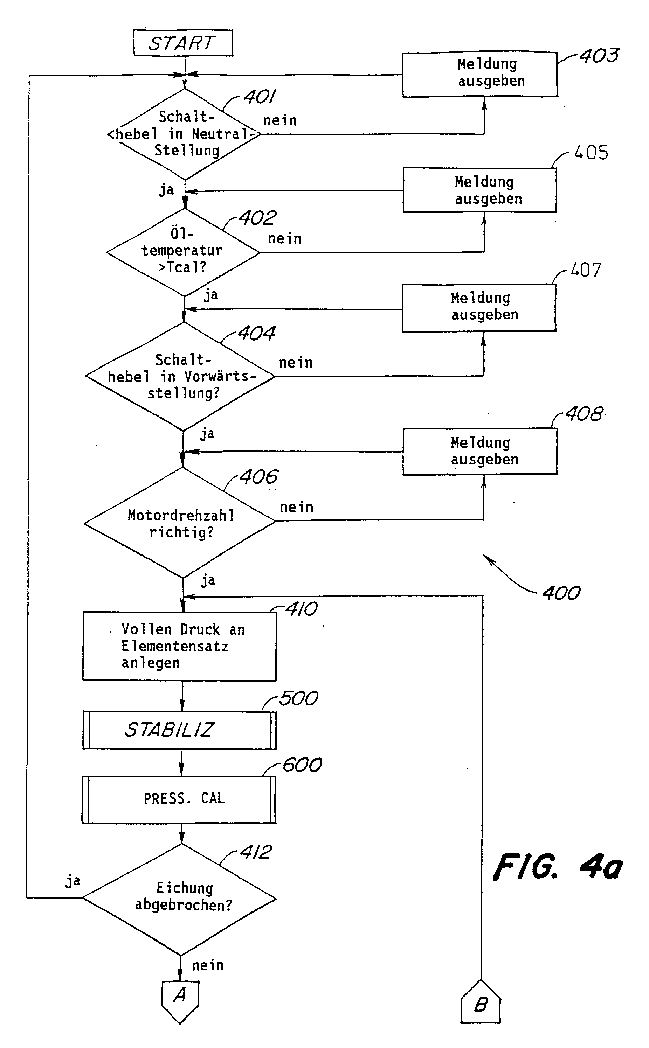

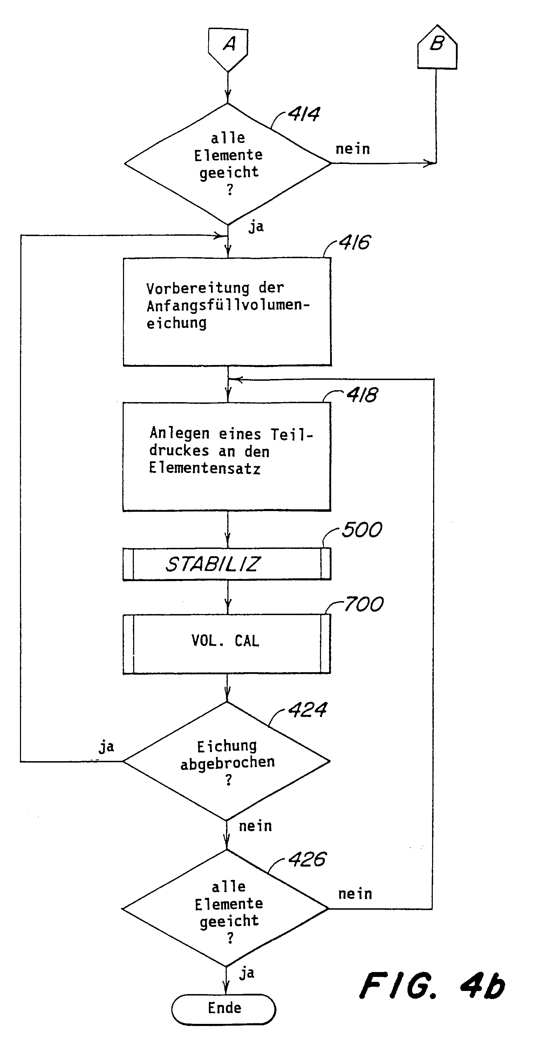

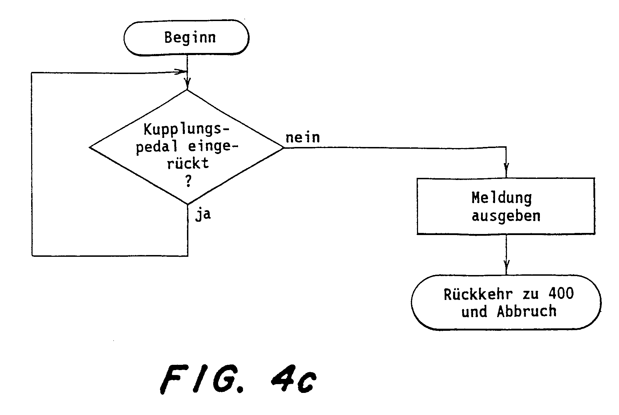

In der Haupteichschleife 400 (Fig. 4a und 4b) führt die Steuereinheit 30 das folgende Eichverfahren aus. Zuerst überprüft Schritt 401, ob der Schalthebel 36 sich tatsächlich in der Neutralstellung befindet. Ist der Schalthebel 36 nicht in Neutralstellung, so erzeugt Schritt 401 so lange eine entsprechende Meldung oder ein Symbol auf der Armaturenbrettanzeige 34, bis sich der Schalthebel 36 in seiner Neutralstellung befindet. Ist dies der Fall, so wird das Eichverfahren mit Schritt 402 fortgesetzt. Diese Überprüfung ist wichtig, da sich hierdurch unerwartete Bewegungen vermeiden lassen, sofern das Eichverfahren bei durch den Schalthebel 36 eingelegtem Gang ungewollt aktiviert wurde. Ohne diesen Schritt wird der erste Gang immer dann eingelegt, wenn das Getriebeöl warm ist, der Schalthebel 36 sich in Vorwärtsstellung befindet und die Maschinendrehzahl 2100 U/min erreicht hat.

Schritt 402 prüft das Öltemperatursignal des Getriebeöltemperatursensors 50. Ist die Öltemperatur kleiner als Tcal, so erzeugt Schritt 205 eine Meldung oder ein Symbol auf der Armaturenbrettanzeige 34, bis die Öltemperatur größer als oder gleich Tcal ist. Ist die Öltemperatur größer als oder gleich einer Schwellwerttemperatur "TcalOil", so wird das Eichverfahren mit Schritt 404 fortgesetzt.

Schritt 404 prüft, ob sich der Schalthebel 36 in einer Vorwärtsstellung befindet, indem der Zustand der nicht gezeigten "Vorwärts"- und "Nicht-Neutral"- Schalthebellageschalter beobachtet wird. Ist keine Vorwärtsstellung eingestellt, so erzeugt Schritt 207 so lange eine Meldung oder ein Symbol auf der Armaturenbrettanzeige 34, die die Bedienungsperson auffordert, den Schalthebel 36 in eine Vorwärtsstellung zu bringen, bis dies erfolgt ist.

Dann prüft Schritt 406 das Motordrehzahlsignal des Motordrehzahlsensors 36. Befindet sich die Motordrehzahl außerhalb einer gewünschten Bandbreite, so erzeugt Schritt 208 so lange eine Meldung oder ein Symbol auf der Armaturenbrettanzeige 34, bis die Motordrehzahl innerhalb des gewünschten Bereichs liegt. Befindet sich die Motordrehzahl in dem gewünschten Bereich, fährt das Eichverfahren mit Schritt 410 fort.

Für jedes zu eichende Element legt Schritt 410 den vollen Druck an einen bestimmten Satz von Kupplungs- und/oder Bremselementen an, um einen inneren Kampf zwischen den verschiedenen Teilen des zu eichenden Elements zu erzeugen, sofern dieses unter Druck steht. Mit anderen Worten, es soll eine Relativdrehung zwischen den verschiedenen Teilen des zu eichenden Elements hervorgerufen werden. Beispielsweise wird sich in bezug auf die Kupplung C1, die in Fig. 2b dargestellt ist, die Kupplungstrommel 56 mit der Eingangswelle 52 drehen. Wenn die Bremsen B1 und B2 unter Druck gesetzt werden, so verhindert dies die Drehung der Kupplungsnabe 62, so daß sich eine Relativdrehung zwischen den Teilen 56 und 62 der Kupplung C1 ergibt.

Die folgende Tabelle legt eine mögliche Reihenfolge dar, in der die Elemente zu eichen sind. Ferner wird für jedes zu eichende Element der Satz der anderen Elemente angegeben, die voll unter Druck gesetzt sind, um den entsprechenden inneren Kampf zu erzeugen. Es versteht sich, daß andere Reihenfolgen möglich sind und daß andere Kombinationen von Elementen unter Druck gesetzt werden können, um den gewünschten internen Kampf zu erzeugen. Die Tabelle ist auf das besondere Getriebe anwendbar, das in der US-A-5,011,465 beschrieben wurde. Ein Fachmann ist jedoch in der Lage, auch ähnliche Kombinationen von Elementen für andere Lastschaltgetriebe festzulegen.

| **Eichtabelle** | |
|---|---|
| zu eichende Elemente | Elemente, die unter vollen Druck gesetzt werden |
| Zugtest | C1, B1 und C3 |
| C2 | B1, B2 |
| B2 | C1, C2, CLO, B5 |
| C3 | C2, B2, B3 |
| B3 | C1, C2, CLO, B5 |
| C1 | B1, B2 |
| B1 | C1, C2, CLO, B5 |
| B5 | C2, B2, B3 |
| B4 | C2, B2, B3 |

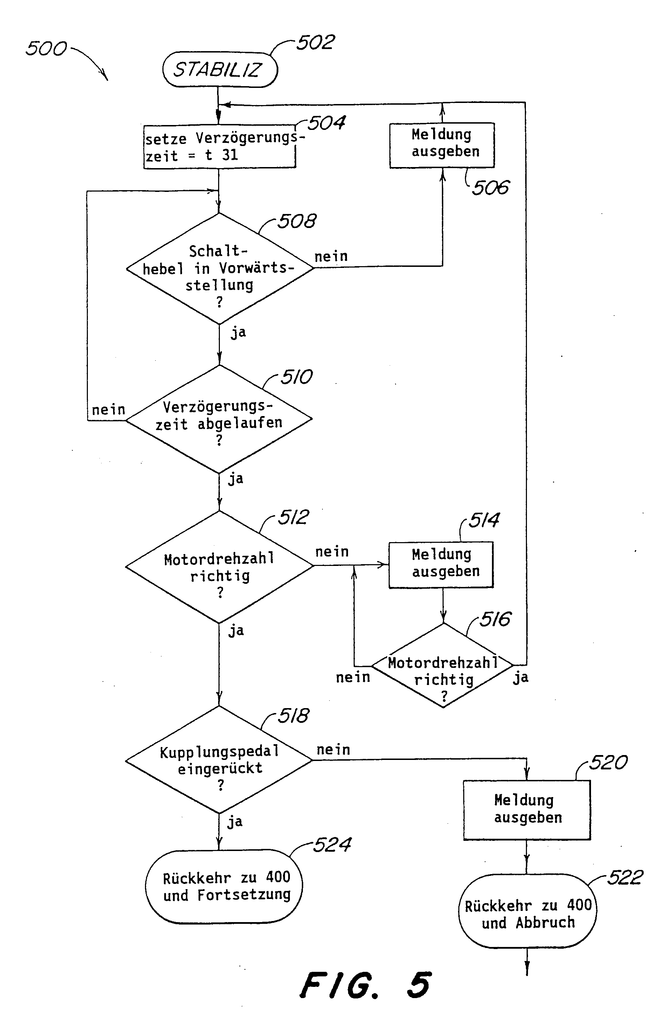

Als nächstes ruft Schritt 500 ein "Stabiliz"-Unterverfahren auf, das in Fig. 5 dargestellt ist. Dieses Unterverfahren (Schritte 504 bis 520) hält für eine Zeitspanne inne, die ausreicht, damit sich das Hydrauliksystem und der Motor stabilisieren, bevor das Verfahren fortgesetzt wird. In Schritt 508 wird eine Überprüfung vorgenommen, um festzustellen, ob der Schalthebel 36 in der Vorwärtsstellung geblieben ist. Falls dies nicht der Fall ist, wird eine Fehlermeldung so lange ausgegeben (Schritt 506), bis der Schalthebel 36 in eine Vorwärtsstellung gebracht ist.

Nachdem die Verzögerungszeit abgelaufen ist (Schritt 510), wird die Motordrehzahl überprüft (Schritt 512), um sicher zu stellen, daß sie innerhalb der für das Verfahren erforderlichen Tolleranz liegt. Ist dies nicht der Fall, so wird eine Meldung ausgegeben (Schritt 514), um anzuzeigen, daß das Eichverfahren darauf wartet, daß sich das System stabilisier hat. Nimmt die Motordrehzahl einen richtigen Wert an (Schritt 516), so kehrt die Steuerung zum Anfang des "Stabiliz"-Unterprogramms zurück (Schritt 504). Stellt Schritt 512 fest, daß sich die Motordrehzahl innerhalb eines geeigneten Drehzahlbereichs befindet, dann prüft Schritt 518, ob das Kupplungspedal eingerückt ist. Wenn dies nicht der Fall ist, wird durch Schritt 520 eine Meldung ausgegeben, der Algorithmus kehrt zu der Hauptschleife 400 zurück und das Eichverfahren wird abgebrochen, ohne daß das Eichunterverfahren 600 ausgeführt wird. Ist das Kupplungspedal eingerückt, so verursacht Schritt 518 eine Rückkehr zu Schritt 600 der Hauptschleife 400. Es soll erwähnt werden, daß im Falle, daß die Kupplung während des Tests von Schritt 518 nicht eingerückt ist, der Algorithmus nicht nur zur Hauptschleife 400 zurückkehrt, vielmehr werden vor dem Abbruch auch nicht die Schritte 600 (oder 700) ausgeführt.

### Fülldruckeichung

Das "Press. Cal"-Unterverfahren 600 zur Fülldruckeichung wird ausgeführt, um den Eichdruckwert "Pfill(el) für jedes Getriebesteuerelement zu bestimmen. Wenn ein Element aus irgend einem Grund nicht geeicht werden kann, wird der bisherige gespeicherte Pfill(el) für dieses Element nicht verändert. Wird während der Eichung Pfill(el) für ein Element bestimmt und stürzt das Eichverfahren später bei einem anderen Element ab, so behalten die Elemente, die fehlerfrei geeicht wurden, ihre angepaßten Pfill(el) bei.

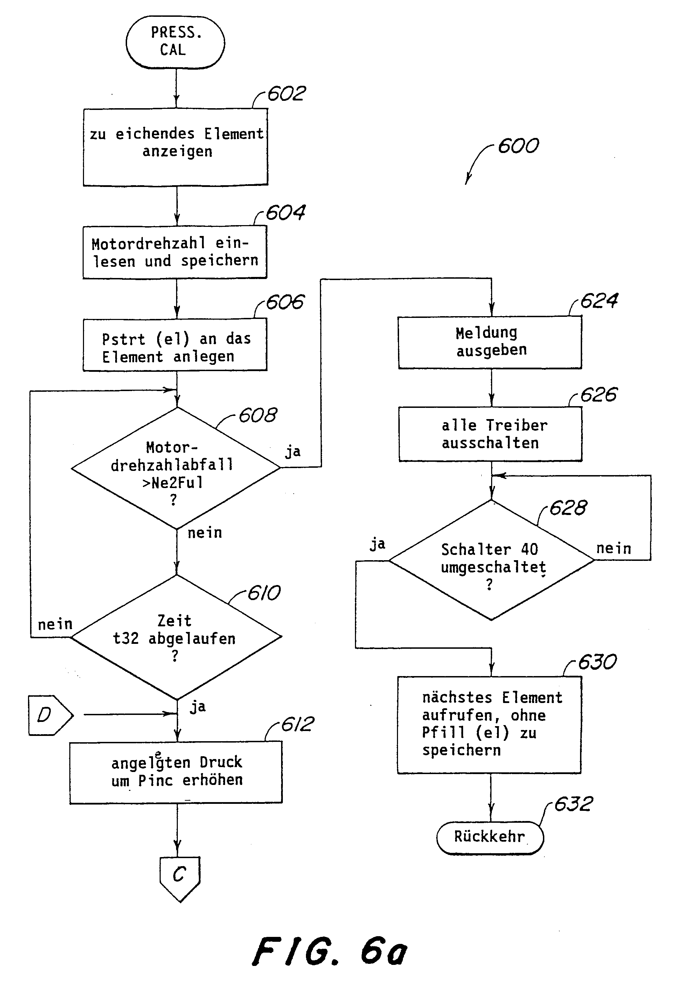

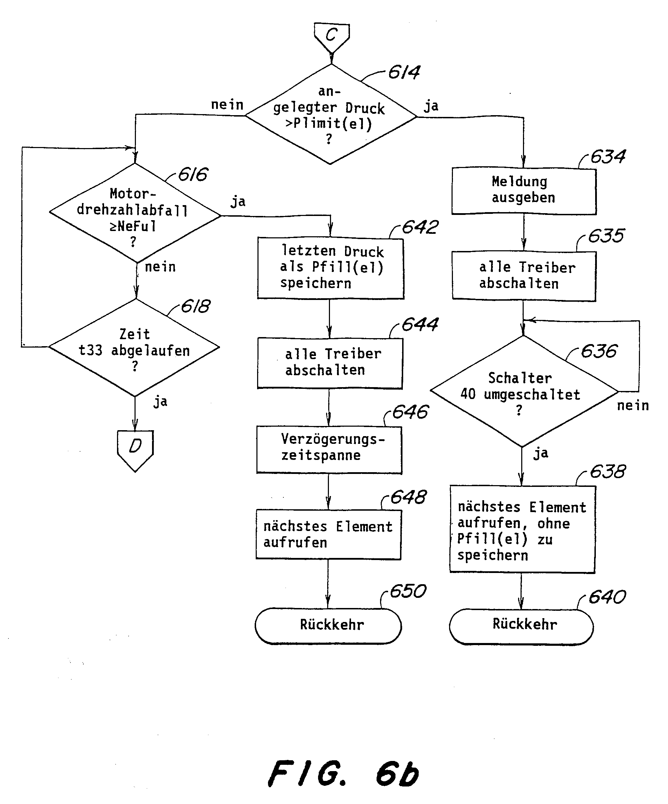

Gemäß der Fig. 6a und 6b gibt Schritt 602 dieses Unterprogramms eine Meldung oder ein Symbol aus, um anzuzeigen, welches Element gerade geeicht wird. Wie in der vorstehenden Tabelle gezeigt, werden am Beginn des automatischen Eichverfahrens die Elemente C1, B1 und C3 automatisch voll unter Druck gesetzt (einrücken von Gang 1F). Ist der Entkupplungsmechanismus 14 eingerückt, so veranlaßt dies den Bewegungserfassungs-Algorithmus 300, eine Fahrzeugbewegung anzuzeigen, woraufhin das Eichverfahren unterbrochen wird und das Lastschaltgetriebe 12 automatisch in seine Neutralstellung geschaltet wird. Dies dient der Überwachung des Einrückzustandes des Entkoppelmechanismus 14.

Ist der Entkoppelmechanismus 14 ausgerückt, so wird keine Bewegung erfaßt, woraufhin die Steuerung das Verfahren 600 verläßt, zur Haupteichschleife bei Schritt 410 zurückkehrt und automatisch den Drucksollwert bestimmt, der erforderlich ist, um gerade jede der Kupplungen oder Bremsen einzurücken, indem die Haupteichschleife fortgesetzt ausgeführt wird. In Schritt 604 wird die Motordrehzahl vom Sensor 46 eingelesen und gespeichert. Dann wird in Schritt 606 für das Element, das geeicht wurde, ein dem Element zugeordneter tiefer Anfangsdruck Pstrt(el) eingestellt. Handelt es sich um das Element C1 oder C2, so wird dieser Pstrt(el) modifiziert oder um einen Betrag vermindert, der von der Motordrehzahl abhängt, um den Zentrifugaldruck zu kompensieren, der durch die Selbstdrehung des Elementes entsteht (die Kompensation von durch Zentrifugalkräfte erzeugten Drücken in einem rotierenden Hydraulikzylinder ist aus der US-A-4,718,306 bekannt). Diese Einstelldrücke sind in der nachfolgenden Tabelle angegeben. Sie werden in einer Tabelle des Speichers der Steuereinheit 30 abgelegt. Tabellenplätze sind Vielfache von 128 Umdrehungen pro Minute, beginnend mit dem ersten Tabellenplatz. Für Motordrehzahlen über 2176 Umdrehungen pro Minute sollte der Regler 0 kPa als Kompensationswert verwenden.

| **Zentrifugaldruckkompensations-Tabelle** | |
|---|---|
| Motordrehzahl (U/min) | Kompensationswert (kPa) |
| 640 | 133 |
| 768 | 127 |
| 896 | 120 |
| 1024 | 113 |
| 1152 | 107 |
| 1280 | 100 |
| 1408 | 93 |
| 1536 | 80 |
| 1664 | 67 |
| 1792 | 60 |
| 1920 | 47 |
| 2048 | 33 |
| 2176 | 13 |

Dieser Anfangsdruck wird während der Schritte 608 und 610 aufrecht erhalten, in denen für eine Zeit t32 der Motordrehzahlabfall mit einem Schwellwert NeFull verglichen wird. Überschreitet der Motordrehzahlabfall nicht den Schwellwert NeFull, so schreitet der Algorithmus zu Schritt 612 weiter. Überschreitet er den Schwellwert , dann geben die Schritte 624 bis 632 eine bestimmte Meldung aus und schalten alle Elemente aus oder druckentlasten diese. Schritt 628 schützt vor weiterem Betrieb, bis der Schalter 40 umgeschaltet wird (von aus auf ein). Sobald der Schalter 40 festgestellt hat, daß das Kupplungspedal 44 niedergedrückt und losgelassen wurde, veranlaßt Schritt 630 die Steuerung, das aktuelle Element zu verlassen, ohne einen Pfill(el)-Wert zu speichern und das nächste Element zur Eichung aufzurufen.

In Schritt 612 wird dann der Drucksollwert, der an das zu eichende Element angelegt ist, um eine Stufe "Pinc" erhöht. Ist in dem Schritt 614 der neue Drucksollwert größer als Plimit(el) für das entsprechende Element, dann wird in den Schritten 634 bis 640 eine bestimmte Meldung ausgegeben (Schritt 634), und alle Elemente werden abgeschaltet (Schritt 635). Schritt 636 verhindert ferner einen Betrieb, bis der Kupplungseingriffsschalter 40 umgeschaltet wurde, und Schritt 638 veranlaßt die Steuerung, das vorliegende Element zu verlassen, ohne einen Fülldruck zu speichern, und das nächste Element zur Eichung auf zurufen. Überschreitet in Schritt 614 der neue Druck nicht Plimit(el), so schreitet der Algorithmus zu Schritt 616 fort.

In Schritt 616 wird dann erneut der Motordrehzahlabfall berechnet und mit dem Schwellwert NeFull verglichen. Der vergrößerte Drucksollwert wird in Schritt 618 für eine Zeit t33 beibehalten.

Ist der Motordrehzahlabfall größer als oder gleich NeFull, dann wird das Element als "voll" betrachtet, und der gegenwärtig geforderte Druck (minus einer Zentrifugaldruckkompensation, sofern verwendbar) ist der Fülldruck Pfill(el). Dieser Pfill(el)-Wert wird in Schritt 642 abgespeichet, und die Treiber für alle Elemente werden durch Schritt 644 abgeschaltet. Dann verzögert Schritt 646 für eine Zeitspanne, Schritt 648 ruft das nächste Element auf und Schritt 650 bewirkt eine Rückkehr zur Hauptschleife.

Wird in Schritt 616 festgestellt, daß der Motordrehzahlabfall kleiner ist als NeFull, dann kehrt die Steuerung zu Schritt 612 zurück, und der Algorithmus fährt in dieser Weise fort, bis der Motordrehzahlabfall in Schritt 616 den Schwellwert NeFull erreicht, oder bis der Drucksollwert einen vorgebbaren Grenzwert für das gegebene Element (Plimit(el)) in Schritt 614 überschritten hat, woraufhin die Steuerung zurück auf den Schritt 412 der Hauptschleife gestellt wird.

Aus den Fig. 4a und 4b ist ersichtlich, daß der Schritt 412 den Algorithmus zu Schritt 402 zurückführt, wenn das Stabilisierungs- oder das Eichverfahren abgebrochen wurde, da der Schalthebel 36 sich in seiner Neutralstellung befand, oder weil das Kupplungspedal 44 betätigt war. Die Schritte 410, 500, 600 und 412 werden wiederholt, bis Schritt 414 feststellt, daß das letzte Element geeicht wurde, woraufhin der Algorithmus mit Schritt 416 fortschreitet, durch welchen die Eichung des Anfangsfüllvolumens vorbereitet wird. Durch Schritt 418 wird dann ein Teildruck an den Elementensatz angelegt, um das Element zu eichen. Hierauf werden das Stabiliz-Unterprogramm 500 und dann ein Füllvolumeneichverfahren 700 ausgeführt. Schritt 424 lenkt den Algorithmus auf Schritt 416 zurück, wenn das Eichverfahren vorzeitig abgebrochen wurde. Andernfalls schreitet der Algorithmus mit Schritt 426 fort. Die Schritte 418, 500, 700 und 424 werden wiederholt, bis Schritt 426 feststellt, daß das letzte Element geeicht wurde, woraufhin der Algorithmus beendet wird.

Die durch dieses Eichverfahren ermittelten Werte sind vorzugsweise auch so bemessen, daß sie Abweichungen der Öltemperatur, der Batteriespannung etc. ausgleichen.

Mit diesem System und Verfahren lassen sich der Reihe nach alle Getriebebremsen und/oder -kupplungen eichen, ohne daß eine weitere Eingabe durch die Bedienungsperson erforderlich ist. Hierdurch wird die Möglichkeit, daß die Bedienungsperson einen Fehler in das Verfahren einleitet (wodurch beispielsweise ein oder mehrere Elemente nicht geeicht werden), wirkungsvoll ausgeschlossen.

Da der Entkupplungsmechanismus 14 ausgerückt ist und innere Kämpfe zwischen den Elementen verwendet werden, um zu bestimmen, wann ein Eingriff erfolgt, wird die Ausgangswelle nicht an einer Drehung (durch Bremsen) gehemmt. Es tritt auch keine Fahrzeugbewegung auf. Daher ist es bei diesem Eichverfahren nicht erforderlich, daß die Fahrzeugbremsen verwendet werden, um eine gefahrvolle Fahrzeugbewegung zu unterbinden. Als zusätzliches Sicherheitsmerkmal überprüft dieses Eichverfahren ständig, ob eine Fahrzeugbewegung vorliegt (durch Beobachtung des Ausgangssignals des Fahrzeuggeschwindigkeitssensors 48) und beendet das Verfahren und stellt das Getriebe 18 auf Neutralstellung, sofern eine Bewegung festgestellt wird. Insbesondere ist ein Vorwärtsgang des Getriebes 18 während der anfänglichen Schritte des Eichverfahrens eingestellt, so daß bei nicht eingerücktem Entkupplungsmechanismus 14 das Fahrzeug sich nur über eine kurze Entfernung bewegen kann, bevor das Getriebe 18 automatisch auf seine Neutralstellung geschaltet wird.

Es wird hervorgehoben, daß während der Schritte 600 und 700 die Steuerung ständig das Kupplungspedal 44 überwacht, um sicher zu stellen, daß dieses während der Eichung voll eingerückt bleibt. Ist während der Eichung das Kupplungspedal 44 nicht eingerückt, so beendet die Steuerung das Verfahren und bricht das Eichverfahren ab, wie in den Schritten 412 und 424 gezeigt wird.

Es wird betont, daß in dem Unterprogramm 600 diese Kupplungspedalüberprüfung so lange aktiv ist, bis der Schritt 624 oder 634 erreicht ist. Hierauf wird das Kupplungspedal 44 aufgefordert, den Fehler zu bestätigen, so daß das Verfahren zu dem nächsten zu eichenden Element fortschreiten kann. In dem Unterprogramm 700 wird das Kupplungspedal 44 auf ähnliche Weise bis zu den Schritten 718 oder 732 überprüft und kann sogar bis Schritt 752 überwacht werden. Mit anderen Worten wird die Überwachung während der tatsächlichen Eichung der Elemente gefordert. Dieses Eichverfahren ist in dem Flußdiagramm der Fig. 4c dargestellt.

### Füllvolumeneichung

Das "Vol. Cal. "-Unterprogramm 700 für die Anfangsfüllvolumeneichung wird ausgeführt, um den Füllvolumeneichwert für jedes Getriebesteuerelement zu bestimmen. Das Füllvolumeneichverfahren ist ähnlich dem Fülldruckeichverfahren. Jedes Element wird einzeln geeicht, und zwar vorzugsweise in der selben Reihenfolge wie in dem Fülldruckeichverfahren. Wie zuvor muß auch hier der Entkupplungsmechanismus 14 ausgerückt sein, um unerwartete Bewegungen zu vermeiden. Irgend welche Fahrzeugbewegungen während des Eichzyklusses bewirken, daß das Getriebe 18 automatisch in seine Neutralstellung gebracht wird. Dieser Eichzyklus wird automatisch in Gang gesetzt, wenn das Fülldruckeichverfahren abgeschlossen ist. Auch hier schreitet das Verfahren fort, ohne daß ein Eingriff der Bedienungsperson erforderlich ist.

Jedes einzelne Element wird hinsichtlich des Anfangsfüllvolumens dadurch geeicht, daß für das zu eichende Element die selbe Kombination von Elementen wie bei der Fülldruckeichung eingerückt wird. Jedoch werden hierbei alle Elemente lediglich mit einem Teildruck beaufschlagt.

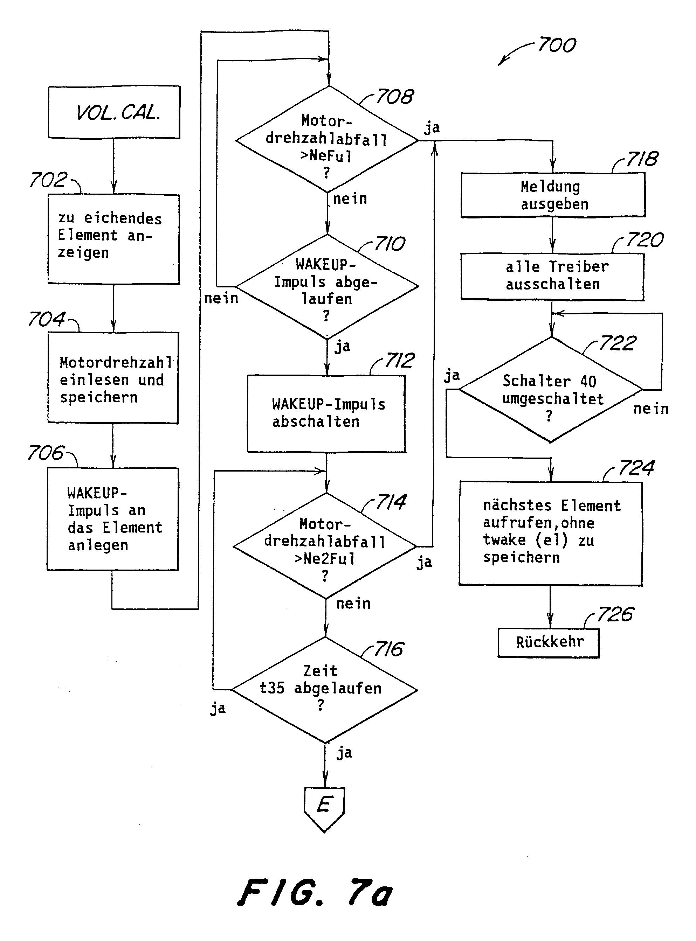

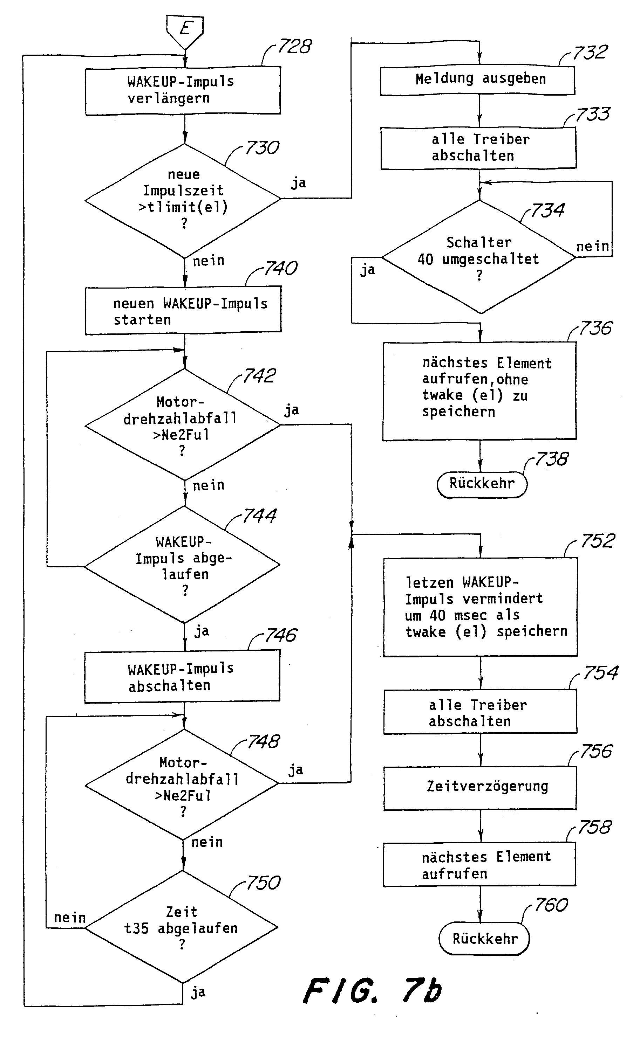

Bezugnehmend auf die Fig. 7a und 7b gibt Schritt 702 an dieses Unterprogramm eine Meldung oder ein Symbol aus, um anzuzeigen, welches Element gerade geeicht wird. Das Verfahren beginnt mit Element C2 der Eichtabelle. Dann schreitet das Verfahren zu Schritt 704, wo die durch den Motordrehzahlsensor 46 erfaßte Motordrehzahl eingelesen und gespeichert wird. Als nächstes wird durch Schritt 706 für das zu eichende Element ein "wakeup"-Impuls an das zu eichende Element angelegt. Dies bedeutet, daß das Element für eine anfängliche Zeitspanne an den vollen Systemdruck angelegt wird. Diese anfängliche Zeitspanne ist veränderlich und hängt von dem zu eichenden Element ab. Durch die Schritte 708 - 710 wird der Motordrehzahlabfall berechnet und während der Zeit, in der der "wakeup"-Impuls angelegt ist, mit einem Schwellwert Ne2Ful verglichen.

Ist der "wakeup"-Impuls beendet, ohne daß der Motordrehzahlabfall den Schwellwert NeFull überschritten hat, so wird mit dem Schritt 712 fortgefahren. Wenn der Motordrehzahlabfall den Schwellwert überschreitet, geben die Schritte 718 - 726 ein bestimmtes Zeichen aus und schalten alle Elemente aus bzw. druckentlasten diese. Schritt 722 verhindert einen weiteren Betrieb, bis der Schalter 40 umgeschaltet wurde (von aus auf ein). Wenn der Schalter 40 festgestellt hat, daß das Kupplungspedal 44 niedergedrückt war und nun freigegeben ist, veranlaßt Schritt 724 die Steuerung, das vorliegende Element zu verlassen, ohne daß ein Volumeneichwert twake(el) gespeichert wird. Das nächste Element wird für die Eichung bereitgestellt.

In Schritt 712 wird der "wakeup"-Impuls beendet. Die Schritte 714 - 716 veranlassen eine Berechnung des Motordrehzahlabfalls und führen während einer Zeit t35, nach der der Start des "wakeup"-Impuls erfolgt ist, einen Vergleich dieses Motordrehzahlabfalls mit einem Schwellwert Ne2Ful durch. Überschreitet der Motordrehzahlabfall den Schwellwert, so richtet der Schritt 714 die Steuerung auf die bereits beschriebenen Schritte 718 - 726. Überschreitet der Motordrehzahlabfall nicht den Schwellwert, so richtet Schritt 716 die Steuerung am Ende der Zeit t35 auf Schritt 728.

Schritt 728 vergrößert die Dauer des "wakeup"-Impulses durch ein Zeitintervall. Ist in Schritt 730 die neue Dauer größer als tlimit(el) für das entsprechende Element, so wird durch die Schritte 732 - 733 eine Meldung an das rechteste Digit der Anzeige angefügt und alle Elemente abgeschaltet. Schritt 734 verhindert einen weiteren Betrieb, bis der Kupplungseingriffsschalter 40 umgeschaltet wurde. Dann veranlaßt Schritt 736 die Steuerung, das vorliegende Element zu verlassen, ohne daß ein Füllvolumenwert gespeichert wird, und das nächste Element für die Eichung bereitzustellen. Überschreitet in Schritt 730 die neue Dauer nicht den Wert tlimit(el), dann geht es mit Schritt 740 weiter.

Durch die Schritte 742 - 744 wird der Motordrehzahlabfall berechnet und während der neuen Dauer des "wakeup"-Impulses mit dem Schwellwert Ne2Ful verglichen. Überschreitet der Motordrehzahlabfall den Schwellwert, so wird das Element als "voll" angesehen, und Schritt 742 lenkt die Steuerung auf die Schritte 752 - 760. Schritt 752 speichert die letzte "wakeup"-Impulszeit twake(el) als den Volumeneichwert, und alle Treiber werden durch Schritt 754 abgeschaltet. Schritt 756 verzögert für eine Zeitperiode, Schritt 758 stellt auf das nächste Element ein, und Schritt 760 veranlaßt eine Rückkehr zur Hauptschleife. Überschreitet der Motordrehzahlabfall nicht den Schwellwert, dann richtet Schritt 744 am Ende einer neuen Dauer des "wakeup"-Impulses die Steuerung auf Schritt 746, welcher den "wakeup"-Impuls am Ende der neuen Dauer abschaltet.

Durch die Schritte 748 - 750 wird der Motordrehzahlabfall errechnet und während einer Zeit t35 nach dem Start des neuen "wakeup"-Impulses mit einem Schwellwert Ne2Ful verglichen. Überschreitet der Motordrehzahlabfall den Schwellwert, dann richtet Schritt 748 die Steuerung auf die früher beschriebenen Schritte 752 - 760. Überschreitet der Motordrehzahlabfall nicht den Schwellwert, dann lenkt Schritt 750 die Steuerung am Ende der Zeit t35 zurück zu Schritt 728.

## Patentansprüche

1. Verfahren zur Eichung von hydraulischen Parametern wenigstens eines Steuerelementes der Steueranordnung eines Fahrzeuglastschaltgetriebes (12), wobei das Lastschaltgetriebe (12) durch einen Motor (10) antreibbar ist, die Ausgangswelle (13) des Lastschaltgetriebes (12) durch eine Trennvorrichtung (14) wahlweise mit der Fahrzeugantriebswelle (16) verbindbar oder von dieser trennbar ist und das Lastschaltgetriebe (12) zu seiner Umschaltung mehrere durch Hydraulikdruck steuerbare Steuerelemente (20) aufweist, von denen wenigstens das zu eichende Steuerelement durch ein elektrohydraulisches Proportionalsteuerventil (22) ansteuerbar ist, mit folgenden Verfahrensschritten:
- Betreiben des Motors (10) in einem vorbestimmten Drehzahlbereich,
- Abändern eines an das Proportionalsteuerventil (22) angelegten Signals, derart, daß der dem zu eichenden Steuerelement zugeordnete hydraulische Parameter sich schrittweise ändert, wobei die Motordrehzahl überwacht wird, und
- Sichern des an das Proportionalsteuerventil (22) angelegten Signalwerts als Eichwert des hydraulischen Parameters, sofern sich die Motordrehzahl um einen vorbestimmten Betrag ändert,
dadurch gekennzeichnet,
daß am Beginn des Eichverfahrens
- die Trennvorrichtung (14) ausgekuppelt wird, so daß sich die Ausgangswelle (13) des Lastschaltgetriebes (12) frei drehen kann, und
- der Eingriff bestimmter, von dem zu eichenden Steuerelement unterschiedlicher Steuerelemente, derart gesteuert wird, daß eine Relativbewegung zwischen den Teilen des zu eichenden Steuerelementes hervorgerufen wird.

2. Verfahren nach Anspruch 1, dadurch gekennzeichnet, daß der hydraulische Parameter der erforderliche Druck ist, um den Eingriff des zu eichenden Steuerelements einzuleiten.

3. Verfahren nach Anspruch 2, dadurch gekennzeichnet, daß ausgehend von einem unteren Anfangsdruck (Pstrt(el)) das an das Proportionalsteuerventil (22) angelegte Signal derart abgeändert wird, daß der an das zu eichende Element angelegte Druck sich schrittweise erhöht.

4. Verfahren nach Anspruch 1, dadurch gekennzeichnet, daß der hydraulische Parameter das Volumen der erforderlichen Hydraulikflüssigkeit ist, um den Eingriff des zu eichenden Steuerelements einzuleiten.

5. Verfahren nach Anspruch 1, dadurch gekennzeichnet, daß der hydraulische Parameter die erforderliche Zeit ist, um das Steuerelement mit Hydraulikflüssigkeit zu füllen und den Eingriff des zu eichenden Steuerelements einzuleiten.

6. Verfahren nach Anspruch 5, dadurch gekennzeichnet, daß an das zu eichende Steuerelement für eine vorherbestimmte Zeitdauer ein vorherbestimmter Druck angelegt wird und die anstehende Motordrehzahl erfaßt wird, daß diese Prozedur mit schrittweise erhöhter Zeitdauer wiederholt wird, bis die Motordrehzahl gegenüber ihrem urspünglichen Wert um einen vorherbstimmten Betrag abfällt, und daß nach Feststellung dieses Motordrehzahlabfalls, der anzeigt, daß das Steuerelement belastet ist, die Zeitdauer als Eichwert gespeichert wird.

7. Verfahren nach einem der Ansprüche 1 bis 6, dadurch gekennzeichnet, daß das Lastschaltgetriebe (12) automatisch in seine Neutralstellung geschaltet wird, wenn eine Fahrbewegung des Fahrzeugs festgestellt wird.

8. Verfahren nach einem der Ansprüche 1 bis 7, dadurch gekennzeichnet, daß die Verfahrensschritte automatisch zur Eichung jedes von mehreren Steuerelementen des Lastschaltgetriebes (12) wiederholt werden.

9. Verfahren nach einem der Ansprüche 1 bis 8, dadurch gekennzeichnet, daß die anfängliche Motordrehzahl erfaßt und gespeichert wird.

## Claims

1. A method of calibrating hydraulic parameters of at least one control element of the control arrangement of a powershift vehicle transmission (12), wherein the powershift transmission (12) can be driven by an engine (10), the output shaft (13) of the powershift transmission (12) can be selectively coupled to or disconnected from the vehicle drive shaft (16) by a disconnect device (14) and the powershift transmission (12) has a plurality of control elements (20) which can be controlled by hydraulic pressure for shifting the transmission, of which at least the control element to be calibrated can be operated by an electro-hydraulic proportional control valve (22), with the following method steps:
- operating the engine (10) in a predetermined speed range,
- modifying a signal applied to the proportional control valve (22) in such a manner that the hydraulic parameter associated with the control element to be calibrated changes stepwise while the engine speed is monitored, and
- saving the signal value applied to the proportional control valve (22) as the calibration value of the hydraulic parameter when the engine speed changes by a predetermined amount,
characterized in that, at the beginning of the calibration method,
- the disconnect device (14) is uncoupled, so that the output shaft (13) of the powershift transmission (12) can rotate freely, and
- the engagement of certain control elements other than the control element to be calibrated is so controlled that relative movement is caused between the parts of the control element to be calibrated.

2. A method according to claim 1, characterized in that the hydraulic parameter is the pressure required to initiate engagement of the control element to be calibrated.

3. A method according to claim 2, characterized in that, starting from a low starting pressure (Pstrt(el)), the signal applied to the proportional control valve (22) is so modified that the pressure applied to the element to be calibrated increases stepwise.

4. A method according to claim 1, characterized in that the hydraulic parameter is the volume of the hydraulic fluid required to initiate engagement of the control element to be calibrated.

5. A method according to claim 1, characterized in that the hydraulic parameter is the time required for the control element to fill with hydraulic fluid and initiate engagement of the control element to be calibrated.

6. A method according to claim 5, characterized in that a predetermined pressure is applied to the control element to be calibrated for a predetermined interval of time and the current engine speed is sensed, in that this procedure is repeated with the interval of time increased stepwise, until the engine speed droops by a predetermined amount below its original value, and in that after detecting this engine speed droop, which shows that the control element is being loaded, the interval of time is stored as the calibration value.

7. A method according to any of claims 1 to 6, characterized in that the powershift transmission (12) is automatically shifted into its neutral position if motion of the vehicle is detected.

8. A method according to any of claims 1 to 7, characterized in that the method steps are automatically repeated in order to calibrate each of a plurality of control elements of the powershift transmission (12).

9. A method according to any of claims 1 to 8, characterized in that the starting engine speed is detected and stored.

## Revendications

1. Procédé d'étalonnage de paramètres hydrauliques d'au moins un élément de commande du dispositif de commande d'une boîte de vitesses commandée en charge d'un véhicule, selon lequel la boîte de vitesses commandée en charge (12) peut être entraînée par un moteur (10), l'arbre de sortie (13) de la boîte de vitesses commandée en charge (12) peut au choix être relié à l'arbre d'entraînement (16) du véhicule ou en être séparé, par un dispositif de séparation (14), et la boîte de vitesses commandée en charge (12) possède, pour sa commutation, plusieurs éléments de commande (20) pouvant être commandés par une pression hydraulique et dont au moins l'élément de commande devant être étalonné peut être commandé par une soupape électro-hydraulique de commande proportionnelle (22), comportant les étapes opératoires suivantes :
- entraînement du moteur (10) dans une gamme prédéterminée de vitesses de rotation,
- modification d'un signal appliqué à la soupape de commande proportionnelle (22) de telle sorte que le paramètre hydraulique associé à l'élément de commande devant être étalonné varie pas-à-pas, tandis que la vitesse de rotation du moteur est contrôlée, et
- blocage de la valeur de signal appliquée à la soupape de commande proportionnelle (22), en tant que valeur d'étalonnage du paramètre hydraulique dans la mesure où la vitesse de rotation du moteur varie d'une valeur prédéterminée,
caractérisé en ce
qu'au début du procédé d'étalonnage
- le dispositif de séparation (14) est désaccouplé de sorte que l'arbre de sortie (13) de la boîte de vitesses commandée en charge (12) peut tourner librement, et
- l'engagement d'éléments de commande déterminés, qui sont différents de l'élément de commande à étalonner, est commandé de telle sorte qu'un déplacement relatif est provoqué entre les parties de l'élément de commande à étalonner.

2. Procédé selon la revendication 1, caractérisé en ce que le paramètre hydraulique est la pression requise pour déclencher l'engagement de l'élément de commande à étalonner.

3. Procédé selon la revendication 2, caractérisé en ce qu'à partir d'une pression initiale inférieure (Pstrt(el)), le signal, qui est appliqué à la soupape de commande proportionnelle (22), est modifié de telle sorte que la pression appliquée à l'élément à étalonner augmente pas-à-pas.

4. Procédé selon la revendication 1, caractérisé en ce que le paramètre hydraulique est le volume du liquide hydraulique nécessaire pour déclencher l'engagement de l'élément de commande à étalonner.

5. Procédé selon la revendication 1, caractérisé en ce que le paramètre hydraulique est le temps nécessaire pour remplir l'élément de commande avec un liquide hydraulique et déclencher l'engagement de l'élément de commande à étalonner.

6. Procédé selon la revendication 5, caractérisé en ce qu'une pression prédéterminée est appliquée à l'élément de commande à étalonner, pendant une durée prédéterminée et que la vitesse de rotation actuelle du moteur est détectée, que cette procédure est répétée, avec une durée accrue pas-à-pas, jusqu'à ce que la vitesse de rotation du moteur soit inférieure d'une valeur prédéterminée par rapport à sa valeur initiale, et qu'après la détermination de cette réduction de la vitesse de rotation du moteur qui indique que l'élément de commande est chargé, la durée est mémorisée en tant que valeur d'étalonnage.

7. Procédé selon l'une des revendications 1 à 6, caractérisé en ce que la boîte de vitesses commandée en charge (12) est placée automatiquement dans sa position neutre lorsqu'un mouvement du véhicule est détecté.

8. Procédé selon l'une des revendications 1 à 7, caractérisé en ce que les étapes opératoires sont répétées de façon automatique pour l'étalonnage de chacun de plusieurs éléments de commande de la boîte de vitesses commandée en charge (12).

9. Procédé selon l'une des revendications 1 à 8, caractérisé en ce que la vitesse de rotation initiale du moteur est détectée et mémorisée.
